# EUROPEAN PATENT APPLICATION

(11) **EP 3 483 908 A1**
(43) Date of publication of application: **15.05.2019**
(21) Application number: 17824316.8
(22) Date of filing: 06.07.2017
(51) Int. Cl.: H01G 11/70, H01G 11/60

(54) **ELECTRIC DOUBLE-LAYER CAPACITOR**

(30) Priority: 08.07.2016 JP 2016136355
(71) Applicant: Nippon Chemi-Con Corporation, Tokyo 141-8605 (JP)
(72) Inventor: HAGIYA, Masayuki, Tokyo 141-8605 (JP); YAJIMA, Keita, Tokyo 141-8605 (JP)
(74) Representative: AWA Sweden AB
(86) International application number: PCT/JP2017/024759
(87) International publication number: WO 2018/008713

(57) **Abstract**

An electric double-layer capacitor in which an increase in diffusion resistance of the anode with aging can be suppressed even when γ-butyrolactone is used for a solvent is provided. An electric double-layer capacitor includes an element formed by winding an anode foil and a cathode foil with a separator interposed therebetween and being impregnated with an electrolytic solution. An electrolytic solution contains γ-butyrolactone as a solvent. A strip width of the anode foil is larger than a strip width of the cathode foil, and the element is formed so that the anode foil is wound to protrude with respect to the cathode foil in a strip width direction.

## Description

### TECHNICAL FIELD

The present disclosure relates to a winding type electric double-layer capacitor containing γ-butyrolactone as a solvent.

### BACKGROUND ART

Electric double-layer capacitors are formed by housing an element, which is a pair of polarized electrodes impregnated with an electrolytic solution, in a container, and utilize an electricity storing function of electric double layers formed on a boundary surface between the polarized electrodes and the electrolytic solution. Electric double-layer capacitors have advantages in that deterioration in an electrode active material due to repeated charging and discharging is reduced and the lifetime is long.

In electric double-layer capacitors, typically, an activated carbon powder is used for a polarized electrode material, a metal having valve action, such as aluminum, is used for a current collector, and non-protonic electrolytic solutions are used as an electrolytic solution. Quaternary ammonium salts are mainly used for an electrolyte of the electrolytic solution. As a solvent of the electrolytic solution, typically, carbonate-based solvents, such as polypropylene carbonate, or carboxylic acid esters, such as γ-butyrolactone, are used (see, for example, Patent Document 1) .

There is a concern that carbonate-based solvents may generate carbon monoxide gas due to decomposition of the solvent and raise an internal pressure of the electric double-layer capacitor. On the other hand, γ-butyrolactone has an advantage in that gas generation due to decomposition does not easily occur. However, γ-butyrolactone may be hydrolyzed in a cathode that is alkalized due to moisture contained in an electrolytic solution, become an anionic compound, and be deposited on an anode. Due to deposited materials on the anode, the anode increases diffusion resistance, and there is a concern that this might lead to an increase in internal resistance and a decrease in capacitance in the electric double-layer capacitor.

Therefore, conventionally, attempts have been made to suppress hydrolysis of γ-butyrolactone by controlling a moisture content of an electrolytic solution. However, control of a moisture content of an electrolytic solution requires advanced technologies and manufacturing control.

### CITATION LIST

### PATENT LITERATURES

Patent Document 1: JP 2014-217150 A

### SUMMARY OF INVENTION

### TECHNICAL PROBLEM

The present disclosure has been proposed to solve the problems described above. An objective of the present disclosure is to provide an electric double-layer capacitor in which an increase in diffusion resistance of an anode due to aging is easily suppressed even when γ-butyrolactone is used for a solvent.

### SOLUTION TO PROBLEM

According to earnest research by the present inventors, it was found that, when a strip width of an anode foil is made larger than that of a cathode strip, the cathode foil does not have a non-facing portion with respect to the anode foil and the anode foil has a non-facing portion with respect to the cathode, and thereby an influence on an electrolytic solution caused by alkalization of the cathode foil is alleviated due to the non-facing portion formed on the anode foil, that is, a product that used to be deposited on the anode foil cannot be easily produced and diffusion resistance of the anode is suppressed. Here, making a strip width of the anode foil larger than that of the cathode foil means that a polarized electrode material layer of the anode foil is wider than a polarized electrode material layer of the cathode foil.

In order to achieve the above-described objective, the electric double-layer capacitor of the present disclosure includes an element formed by winding an anode foil and a cathode foil with a separator interposed therebetween and being impregnated with an electrolytic solution, in which the electrolytic solution includes γ-butyrolactone as a solvent, a strip width of the anode foil is larger than a strip width of the cathode foil, and the element is formed so that the anode foil is wound to protrude with respect to the cathode foil in a strip width direction.

A strip length of the cathode foil is preferably longer than that of the anode foil, the element is preferably wound so that the cathode foil is positioned at an innermost periphery and an outermost periphery, and the cathode foil preferably protrudes with respect to the anode foil at a beginning of the winding and at an end of the winding in a strip length direction. When a non-facing portion of the anode foil not facing the cathode foil is formed in the strip length direction, abnormal deterioration occurs in the separator, and direct current (DC) internal resistance of the electric double-layer capacitor increases.

The anode foil is preferably wider than the cathode foil by 0 mm or more and less than 12.0 mm. Within this range, the larger a protrusion amount of the anode foil is, the more an increase in DC internal resistance is suppressed. It is more preferable that the anode foil is wider than the cathode foil by 0 mm or more and less than 10.0 mm. When the width of the anode foil is made larger than that of the cathode foil by 10 mm, an absolute value of the DC internal resistance increases. Here, making a width larger by 0 mm or more and less than 12 mm or making a width larger by 0 mm or more and less than 10 mm means that a width of the polarized electrode material is made larger in this range.

The element is preferably formed so that both side portions of the anode foil extending in the strip length direction are wound to protrude with respect to the cathode foil. Accordingly, alkalization of the electrolytic solution is suppressed due to the non-facing portion of the anode foil, and a satisfactory environment in which deterioration reactions of γ-butyrolactone do not easily occur is created.

When both sides of the anode foil protrude with respect to the cathode foil, it is preferable that both side portions of the anode foil is wound to each protrude by 0 mm or more and less than 6.0 mm with respect to the cathode foil. Within this range, the larger a protrusion amount of the anode foil is, the more an increase in DC internal resistance is suppressed. It is more preferable that the anode foil is wound to each protrude by 0 mm or more and less than 5.0 mm with respect to the cathode foil. When both sides of the anode foil are made to each protrude by 6.0 mm with respect to the cathode foil, an absolute value of DC internal resistance increases. Here, protruding by 0 mm or more and less than 6 mm or protruding by 0 mm or more and less than 5.0 mm means that the polarized electrode material layer protrudes in this range.

The separator may be a non-woven fabric including synthetic fibers. Coping with the suppression of alkalization of the electrolytic solution due to the anode-side non-facing portion, when a non-woven fabric including synthetic fibers which is an acid resistant material is used for the separator, the separator would not be colored even when both sides of the anode foil each protrude by 5.0 mm or more and 6.0 mm or less with respect to the cathode foil.

### ADVANTAGEOUS EFFECTS OF INVENTION

According to the present disclosure, an increase in diffusion resistance of the anode with aging can be suppressed even when γ-butyrolactone is used for a solvent.

### BRIEF DESCRIPTION OF DRAWINGS

FIG. 1 is a figure illustrating an arrangement and dimensions of an anode foil and a cathode foil of an electric double-layer capacitor according to the present embodiment.
FIG. 2 is a figure illustrating a method of winding the anode foil and the cathode foil of the electric double-layer capacitor according to the present embodiment.

### DESCRIPTION OF EMBODIMENTS

### (Overall structure)

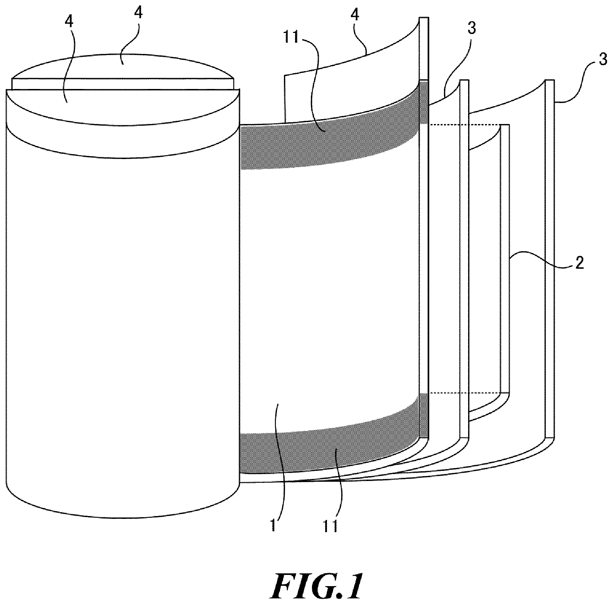

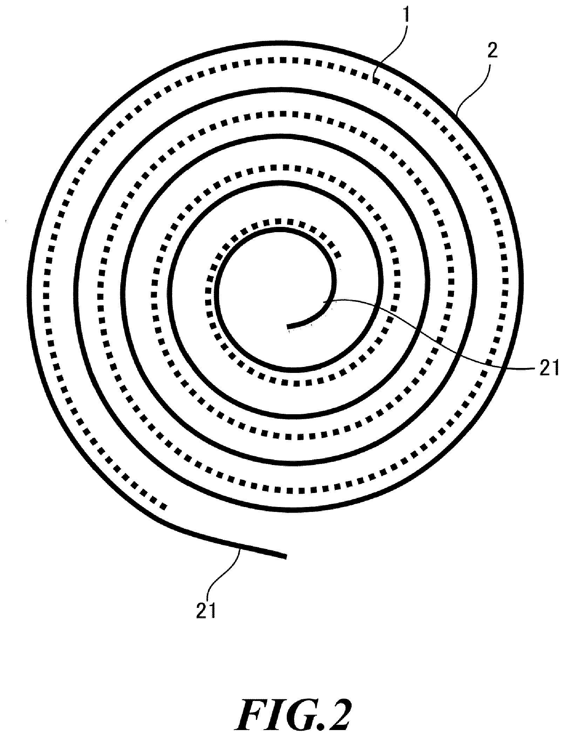

Hereinafter, embodiments of an electric double-layer capacitor according to the present disclosure will be described in detail with reference to the drawings. FIG. 1 is a figure illustrating dimensions and positional relations of an anode foil and a cathode foil of the electric double-layer capacitor according to the present disclosure. FIG. 2 is a figure illustrating a method of winding the anode foil and the cathode foil of the electric double-layer capacitor according to the present disclosure.

An electric double-layer capacitor utilizes an electricity storing function of electric double layers formed on a boundary surface between a polarized electrode and an electrolytic solution, and is formed by housing an element which is a pair of polarized electrodes impregnated with an electrolytic solution in a container. As illustrated in FIGS. 1 and 2, the pair of polarized electrodes are an anode foil 1 and a cathode foil 2 formed by integrating a polarized electrode material layer with a current collector, and are separated by a separator to prevent short-circuit. This electric double-layer capacitor is of a winding type. The element is formed by providing a tab 4 on the anode foil 1 and cathode foil 2 in strip form, and winding the anode foil 1 and the cathode foil 2 with the separator 3 interposed therebetween in a spiral form. In the anode foil 1 and the cathode foil 2, a direction along the spiral winding is referred to as a strip length direction, and a body height direction of the element is referred to as a strip width direction. Generally, the anode foil 1 and the cathode foil 2 are wound in a longitudinal direction, in which the longitudinal direction is the strip length direction and a short-length direction is the strip width direction.

As illustrated in FIG. 1, the polarized electrode material layer of the anode foil 1 has a larger width than that of the cathode foil 2. When the polarized electrode material layer of the anode foil 1 faces the cathode foil 2 via the separator 3, the polarized electrode material layer of the anode foil 1 protrudes with respect to the cathode foil 2 in the strip width direction. In other words, a side portion of the polarized electrode material layer extending in the strip length direction is exposed. The portion protruding in the polarized electrode material layer of the anode foil 1 does not face the polarized electrode material layer of the cathode foil 2. The portion of the polarized electrode material layer of the anode foil 1 protruding with respect to the cathode foil 2 is referred to as an anode-side non-facing portion 11. This electric double-layer capacitor has the anode-side non-facing portion 11 extending in the strip width direction of the anode foil 1.

Here, the terms "larger width" and "protruding" are defined with respect to a polarized electrode material layer. For example, a strip width of the polarized electrode material layer and a strip width of the current collector can be the same or the current collector can be larger. However, even if a strip width of the current collector is larger than that of the polarized electrode material layer, when the polarized electrode material layers of the anode foil 1 and the cathode foil 2 have the same width, this is not "larger width" and "protruding". Hereinafter, a case in which the strip width of the polarized electrode material layer of the anode foil 1 has a larger width than the strip width of the polarized electrode material layer of the cathode foil 2 is simply expressed as a case in which the strip width of the anode foil 1 has a larger width than the strip width of the cathode foil 2. Also, a case in which the polarized electrode material layer of the anode foil 1 protrudes with respect to the polarized electrode material layer of the cathode foil 2 in the strip width direction is simply expressed as a case in which the anode foil 1 protrudes with respect to the cathode foil 2. That is, only the polarized electrode material layer of the anode foil 1 is referred to as the anode-side non-facing portion 11, and a region of the current collector without the polarized electrode material layer is not included in the anode-side non-facing portion 11. Similarly, cathode-side non-facing portions 21 to be described below also refers to a polarized electrode material layer.

The anode-side non-facing portions 11 are preferably formed at both side portions extending in the strip length direction. That is, the anode foil 1 is preferably disposed to protrude with respect to upper and lower end portions of the cathode foil 2 in the strip width direction. It is presumed that the anode-side non-facing portions 11 can maintain an acidic environment in which deterioration reactions of γ-butyrolactone do not easily progress, but progress of alkalization of an electrolytic solution can be satisfactorily suppressed when the anode-side non-facing portions 11 are present at upper and lower sides in the strip width direction.

Protrusion amounts of upper and lower portions of the anode-side non-facing portions 11 may be, for example, equivalent to each other. The anode foil 1 and the cathode foil 2 may be overlapped with the separator 3 interposed therebetween and wound so that center lines in the strip length direction of the anode foil 1 and the cathode foil 2 are aligned. When the electric double-layer capacitor is planned to be implemented so that a body height direction of the electric double-layer capacitor is up and down, a protrusion amount may be made larger at a lower side in which the electrolytic solution tends to remain.

It is preferable that the protrusion amounts of the anode-side non-facing portions 11 be each in a range of more than 0 mm and 6.0 mm or less at both side portions. Particularly, when an element having a diameter of 40 mm and a height of 65 mm is used, this range is suitable. When the anode-side non-facing portions 11 at both side portions are in a range of more than 0 mm and 6.0 mm or less, a capacitance retention rate with aging of the electric double-layer capacitor is high, and aging deterioration of direct current (DC) internal resistance of the electric double-layer capacitor is small.

However, when the protrusion amounts of the anode-side non-facing portions 11 are each set to 6.0 mm at both side portions, an absolute value of the DC internal resistance increases. Accordingly, in view of an absolute value of the DC internal resistance, a more preferable range is the protrusion amounts of the anode-side non-facing portions 11 each being in a range of more than 0 mm and less than 6.0 mm at both side portions.

Still more preferably, the protrusion amounts of the anode-side non-facing portions 11 are each in a range of more than 0 mm and less than 5.0 mm at both side portions . Although the anode-side non-facing portions 11 suppress alkalization of the electrolytic solution, within this range, an effect of suppressing alkalization of the electrolytic solution due to the anode-side non-facing portions 11 does not influence the separator 3. However, even when the widths of the anode-side non-facing portions 11 at both side portions are each in a range of 5.0 mm or more and 6.0 mm or less, coloring of the separator 3 is suppressed by using a separator 3 made of an acid resistant material to be described below.

On the other hand, when the anode foil 1 is made longer than the cathode foil 2 also in the strip length direction so that the anode foil 1 is at an innermost periphery and an outermost periphery, and portions of the anode foil 1 not facing the cathode foil 2 are formed at a beginning of the winding and at an end of the winding, although portions not facing the cathode foil 2 are merely formed in the strip length direction similarly to those in the strip width direction, the separator 3 may deteriorate unexpectedly.

Therefore, as illustrated in FIG. 2, the cathode foil 2 is longer compared to the anode foil 1 in the strip length direction. When the cathode foil 2 is made to face the anode foil 1 via the separator 3 interposed therebetween, both end portions thereof aligned in the strip length direction protrude with respect to the anode foil 1. The protruding portions of the cathode foil 2 do not face the anode foil 1. The portions of the cathode foil 2 protruding from the anode foil 1 are referred to as the cathode-side non-facing portions 21. This electric double-layer capacitor has the cathode-side non-facing portions 21 of the cathode foil 2 in the strip length direction.

Further, as illustrated in FIG. 2, the element is formed such that a beginning side of the first winding and an end side of the last winding are formed by the cathode foil 2. That is, by first winding the cathode foil 2 by one or more turns, winding so that the anode foil 1 to be on an inner peripheral side and the cathode foil 2 to be on an outer peripheral side in the layers of the anode foil 1, the separator 3, and the cathode foil 2, and finally winding the cathode foil 2 past an end portion of the anode foil 1 on the outermost periphery, the cathode foil 2 is made to be positioned on the innermost periphery and on the outermost periphery. Then, the cathode side non-facing portions 21 are provided at the beginning of the winding and at the end of the winding of the cathode foil 2.

### (Anode foil/cathode foil)

Detailed examples of respective constituents of the electric double-layer capacitor are as follows. Typically, the polarized electrode material is a carbon powder. A conductive auxiliary agent may be added to the carbon powder to form a polarized electrode material. The carbon powder may be subjected to an activation treatment, such as steam activation, alkali activation, zinc chloride activation, electric field activation, or the like, and an aperture treatment.

Examples of the carbon powder are as follows. As the carbon powder, natural plant tissues such as a coconut husk, synthetic resins such as phenol, an activated carbon which has raw material thereof derived from fossil fuels such as coal, coke, or pitch, carbon blacks such as Ketjen black, acetylene black, or channel black, carbon nanohorn, amorphous carbon, natural graphite, artificial graphite, graphitized Ketjen black, activated carbon, mesoporous carbon, and the like may be exemplified.

As the conductive auxiliary agent, Ketjen black, acetylene black, natural/artificial graphite, fibrous carbon, or the like can be used, and as fibrous carbon, a fibrous carbon such as carbon nanotubes or carbon nanofibers (hereinafter, CNF) can be exemplified. The carbon nanotubes may be a single-walled carbon nanotubes (SWCNT) having one layer of a graphene sheet, may be a multi-walled carbon nanotubes (MWCNT) in which two or more layers of graphene sheets are coaxially rolled up and tube walls thereof are multilayered, and may be mixture thereof.

As the current collector, a metal having valve action such as aluminum foil, platinum, gold, nickel, titanium, steel, or carbon can be used. For a shape of the current collector, an arbitrary shape such as a film shape, a foil shape, a plate shape, a net shape, an expanded metal shape, or a cylindrical shape can be employed. A surface of the current collector may be formed as an irregular surface by an etching treatment or the like, or may be formed as a planar surface. Further, a surface treatment may be performed so that phosphorus is adhered to the surface of the current collector.

### (Carbon coating layer)

A carbon coating layer containing a conductive agent such as graphite may be provided between the current collector and the polarized electrode layer. The carbon coating layer can be formed by applying a conductive agent such as graphite, a slurry containing, for example, a binder or the like on a surface of the current collector and drying.

### (Electrolytic solution)

A solvent of the electrolytic solution is γ-butyrolactone. Since γ-butyrolactone is easily hydrolyzed by an alkalized cathode foil 2 and becomes an anionic compound, is deposited on the anode foil 1, and shortens a lifetime of the electric double-layer capacitor, γ-butyrolactone is suitable for the present electric double-layer capacitor in which alkalization of the electrolytic solution is suppressed by the anode-side non-facing portions 11.

As for the solvent for the electrolytic solution, a secondary solvent can also be mixed into the γ-butyrolactone. Examples of secondary solvents include chain sulfones such as ethyl isopropyl sulfone, ethyl methyl sulfone, or ethyl isobutyl sulfone, cyclic sulfones such as sulfolane or 3-methylsulfolane, acetonitrile, 1,2-dimethoxyethane, N-methylpyrrolidone, dimethylformamide, dimethyl sulfoxide, tetrahydrofuran, 2-methyl tetrahydrofuran, 1,3-dioxolane, nitromethane, ethylene glycol, ethylene glycol dimethyl ether, ethylene glycol diethyl ether, water, or a mixture thereof.

As an electrolyte of the electrolytic solution, any may be used as long as it can generate quaternary ammonium ions, and one or more kinds selected from various types of quaternary ammonium salts can be exemplified. Particularly, ethyltrimethylammonium BF₄, diethyldimethylammonium BF₄, triethylmethylammonium BF₄, tetraethylammonium BF₄, spiro-(N,N')-bipyrrolidinium BF₄, methylethylpyrrolidinium BF₄, ethyltrimethylammonium PF₆, diethyldimethylammonium PF₆, triethylmethylammonium PF₆, tetraethylammonium PF₆, spiro-(N,N')-bipyrrolidinium PF₆, tetramethylammonium bis(oxalato)borate, ethyltrimethylammonium bis(oxalato)borate, diethyldimethylammonium bis(oxalato)borate, triethylmethylammonium bis(oxalato)borate, tetraethylammonium bis (oxalato) borate, spiro-(N,N')-bipyrrolidinium bis(oxalato)borate, tetramethylammonium difluorooxalatoborate, ethyltrimethylammonium difluorooxalatoborate, diethyldimethylammonium difluorooxalatoborate, triethylmethylammonium difluorooxalatoborate, tetraethylammonium difluorooxalatoborate, spiro-(N,N')-bipyrrolidinium difluorooxalatoborate, or the like is preferable.

### (Separator)

As the separator 3, a cellulose-based separator, a synthetic fiber non-woven fabric-based separator, a mixed paper obtained by mixing cellulose and synthetic fibers, a porous film, or the like can be used. As the cellulose, there are Kraft, Manila hemp, esparto, hemp, rayon, and the like. For the non-woven fabric, there are polyester, polyphenylene sulfide, polyethylene terephthalate, polybutylene terephthalate, polyamide, polyimide, fluororesin, polyolefin-based resins such as polypropylene or polyethylene, and fabrics of ceramic, glass, or the like.

More preferably, since alkalization of the electrolytic solution is suppressed by the anode-side non-facing portions 11 of the anode foil 1, acid resistant materials such as a synthetic fiber non-woven fabric, glass materials, or the like are used as the separator 3. Even when the widths of the anode-side non-facing portions 11 are each in a range of 5 mm or more and 6 mm or less at both side portions, coloring has not been confirmed in the separator 3 formed of acid resistant materials such as a synthetic fiber non-woven fabric, glass materials, or the like.

Further, various types of additive may be contained in the electrolytic solution. As the additives, phosphoric acids and derivatives thereof (phosphoric acid, phosphorous acid, phosphoric acid esters, phosphonic acids, or the like), boric acids and derivatives thereof (boric acid, boric oxide acid, boric acid esters, complexes of boron and a compound having a hydroxyl group and/or a carboxyl group, or the like), nitrates (lithium nitrate, or the like), nitro compounds (nitrobenzoic acid, nitrophenol, nitrophenetole, nitroacetophenone, aromatic nitro compounds, or the like), and the like can be exemplified. From a viewpoint of conductivity, an amount of additives is preferably 10 wt% or less of the entire electrolyte, more preferably 5 wt% or less. Also, the electrolyte may contain a gas absorbing agent. As for the absorbing agent for absorbing a gas generated from electrodes, there is no particular limitation as long as the gas absorbing agent does not react with any of the components (solvent, electrolytic salt, various types of additive, and the like) of the electrolyte and does not remove (adsorb or the like) them. Specific examples thereof include zeolite, silica gel, and the like.

### [Examples]

Hereinafter, the present disclosure will be described in more detail on the basis of examples. It should be noted that the present disclosure is not limited to the following examples.

### (Example 1)

With respect to 100 parts by weight of steam-activated carbon, 9 parts by weight of carbon black, 2 parts by weight of carboxymethyl cellulose as a dispersant, 2 parts by weight of SBR emulsion as a binder, and pure water were mixed together to obtain a slurry. Also, an aluminum foil that had been subjected to an etching treatment was immersed in a phosphoric acid aqueous solution to deposit phosphorus on a surface thereof, a paint containing graphite was applied to the surface of the foil to form a carbon coating layer of the aluminum foil surface on both surfaces of the aluminum foil, and a current collector foil was prepared.

A slurry prepared in the same manner was applied to both surfaces of the current collector foil that had been prepared and was dried to prepare a coated electrode. This coated electrode was cut to the dimensions described below to prepare the anode foil 1 and a cathode foil 2 to be used in Example 1. In Example 1, a strip width of the anode foil 1 was set to 41.0 mm and a strip width of the cathode foil 2 was set to 40.0 mm so that the anode foil 1 was wider than the cathode foil 2 by 1.0 mm. The numerical value of the strip width was a value measured for the layer of the polarized electrode material.

Also, center lines of the anode foil 1 and the cathode foil 2 extending in the strip length direction were aligned, the anode-side non-facing portions 11 were provided such that the anode foil 1 protruded uniformly 0.5 mm upward and downward with respect to the cathode foil 2 in the strip width direction, the anode foil 1 and the cathode foil 2 with the rayon separator 3 interposed therebetween are overlapped, and a winding type element was formed. In the element, the cathode foil 2 was made to be the beginning of the first winding and the end of the last winding. The cathode foil 2 was caused to protrude in the strip length direction by 30 mm at the beginning of the first winding and to protrude in the strip length direction by 30 mm at the end of the last winding, and the cathode-side non-facing portions 21 were formed in the cathode foil 2. The numerical value of the strip length was a value measured for the layer of the polarized electrode material.

This element was impregnated with an electrolytic solution. The electrolytic solution used was 1.5 M methylethylpyrrolidinium BF₄/γ-butyrolactone solution, the element impregnated with the electrolytic solution was placed in an exterior case of Φ 40×65 L and sealed with a sealing body, and an electric double-layer capacitor of Example 1 was prepared.

### (Example 2)

A strip width of the anode foil 1 was set to 42.0 mm and a strip width of the cathode foil 2 was set to 40.0 mm so that the anode foil 1 was wider than the cathode foil 2 by 2.0 mm. An element was formed such that the anode foil 1 was wound to protrude uniformly 1.0 mm upward and downward with respect to the cathode foil 2 in the strip width direction. Other fabrication conditions of the electric double-layer capacitor, such as preparation of a slurry, preparation of a current collector foil, and winding with the cathode foil 2 at the beginning of the first winding and at the end of the last winding, were the same as those in Example 1.

### (Example 3)

A strip width of the anode foil 1 was set to 44.0 mm and a strip width of the cathode foil 2 was set to 40.0 mm so that the anode foil 1 was wider than the cathode foil 2 by 4.0 mm. An element was formed such that the anode foil 1 was wound to protrude uniformly 2.0 mm upward and downward with respect to the cathode foil 2 in the strip width direction. Other fabrication conditions of the electric double-layer capacitor, such as preparation of a slurry, preparation of a current collector foil, and winding with the cathode foil 2 at the beginning of the first winding and at the end of the last winding, were the same as those in Example 1.

### (Example 4)

A strip width of the anode foil 1 was set to 46.0 mm and a strip width of the cathode foil 2 was set to 40.0 mm so that the anode foil 1 was wider than the cathode foil 2 by 6.0 mm. An element was formed such that the anode foil 1 was wound to protrude uniformly 3.0 mm upward and downward with respect to the cathode foil 2 in the strip width direction. Other fabrication conditions of the electric double-layer capacitor, such as preparation of a slurry, preparation of a current collector foil, and winding with the cathode foil 2 at the beginning of the first winding and at the end of the last winding, were the same as those in Example 1.

### (Example 5)

A strip width of the anode foil 1 was set to 48.0 mm and a strip width of the cathode foil 2 was set to 40.0 mm so that the anode foil 1 was wider than the cathode foil 2 by 8.0 mm. An element was formed such that the anode foil 1 was wound to protrude uniformly 4.0 mm upward and downward with respect to the cathode foil 2 in the strip width direction. Other fabrication conditions of the electric double-layer capacitor, such as preparation of a slurry, preparation of a current collector foil, and winding with the cathode foil 2 at the beginning of the first winding and at the end of the last winding, were the same as those in Example 1.

### (Example 6)

A strip width of the anode foil 1 was set to 50.0 mm and a strip width of the cathode foil 2 was set to 40.0 mm so that the anode foil 1 was wider than the cathode foil 2 by 10.0 mm. An element was formed such that the anode foil 1 was wound to protrude uniformly 5.0 mm upward and downward with respect to the cathode foil 2 in the strip width direction. Other fabrication conditions of the electric double-layer capacitor, such as preparation of a slurry, preparation of a current collector foil, and winding with the cathode foil 2 at the beginning of the first winding and at the end of the last winding, were the same as those in Example 1.

### (Example 7)

A strip width of the anode foil 1 was set to 52.0 mm and a strip width of the cathode foil 2 was set to 40.0 mm so that the anode foil 1 was wider than the cathode foil 2 by 12.0 mm. An element was formed such that the anode foil 1 was wound to protrude uniformly 6.0 mm upward and downward with respect to the cathode foil 2 in the strip width direction. Other fabrication conditions of the electric double-layer capacitor, such as preparation of a slurry, preparation of a current collector foil, and winding with the cathode foil 2 at the beginning of the first winding and at the end of the last winding, were the same as those in Example 1.

### (Comparative example 1)

Unlike Examples 1 to 7 having the anode-side non-facing portions 11, the cathode foil 2 was arranged to protrude with respect to the anode foil 1 in the strip width direction. In Comparative example 1, a strip width of the anode foil 1 was set to 38.0 mm and a strip width of the cathode foil 2 was set to 40.0 mm so that the cathode foil 2 was wider than the anode foil 1 by 2.0 mm. Then, an element was formed such that the cathode foil 2 was wound to protrude uniformly 1.0 mm upward and downward with respect to the anode foil 1 in the strip width direction. Other fabrication conditions of the electric double-layer capacitor, such as preparation of a slurry, preparation of a current collector foil, and winding with the cathode foil 2 at the beginning of the first winding and at the end of the last winding, were the same as those in Example 1.

### (Comparative Example 2)

In Comparative example 2, unlike Examples 1 to 7, the cathode foil 2 was arranged to protrude with respect to the anode foil 1 in the strip width direction. In Comparative Example 2, a strip width of the anode foil 1 was set to 39.0 mm and a strip width of the cathode foil 2 was set to 40.0 mm so that the cathode foil 2 was wider than the anode foil 1 by 1.0 mm. Then, an element was formed such that the cathode foil 2 was wound to protrude uniformly 0.5 mm upward and downward with respect to the anode foil 1 in the strip width direction. Other fabrication conditions of the electric double-layer capacitor, such as preparation of a slurry, preparation of a current collector foil, and winding with the cathode foil 2 at the beginning of the first winding and at the end of the last winding, were the same as those in Example 1.

### (Comparative example 3)

In Comparative example 3, unlike Examples 1 to 7, strip widths of the anode foil 1 and the cathode foil 2 were similarly set to 40.0 mm so that there was no protruding portion in both the anode foil 1 and the cathode foil 2. Other fabrication conditions of the electric double-layer capacitor, such as preparation of a slurry, preparation of a current collector foil, and winding with the cathode foil 2 at the beginning of the first winding and at the end of the last winding, were the same as those in Example 1.

### (Checking of lifetime performance)

A constant voltage of 2.5 V was applied to the electric double-layer capacitors of Examples 1 to 7 and Comparative examples 1 to 3 at 85°C to measure a discharge capacitance and a DC internal resistance at the initial stage and a discharge capacitance and a DC internal resistance after the elapse of a certain period of time, and a capacitance change rate ΔCap (%) and DC internal resistance ΔDCIR (%) were calculated. For Examples 1 and 2 and Comparative examples 1 to 3, the discharge capacitance and the DC internal resistance were measured again after the elapse of 2000 hours, and the capacitance change rate ΔCap (%) and the DC internal resistance ΔDCIR (%) were calculated and are summarized in Table 1 below. For Examples 3 to 7, the discharge capacitance and the DC internal resistance were measured again after the elapse of 1500 hours, and the capacitance change rate ΔCap (%) and the DC internal resistance ΔDCIR (%) were calculated and summarized in Table 2 below. In the tables, the "width of the anode-side non-facing portions 11" indicates each protrusion amount at both side portions, and one in which the "width of the anode-side non-facing portions 11" is expressed as a negative number means that the cathode foil 2 protrudes with respect to the anode foil 1 and a protrusion amount thereof is represented by an absolute value of the negative number.

**(Table 1)**

| | Width of anode-side non-facing portion | ΔCap (%) | ΔDCIR (%) |
|---|---|---|---|
| Comparative example 1 | -1.0mm | -36 | +257 |
| Comparative example 2 | -0.5mm | -33 | +221 |
| Comparative example 3 | 0.0mm | -31 | +213 |
| Example 1 | 0.5mm | -30 | +206 |
| Example 2 | 1.0mm | -29 | +180 |

**(Table 2)**

| | Width of anode-side non-facing portion | ΔCap (%) (Capacitance after elapse of 1500 hrs./Capacitance at initial stage) | ΔDCIR (%) (Resistance after elapse of 1500 hrs./Resistance at initial stage) |
|---|---|---|---|
| Example 3 | 2.0mm | -26% (282/382) | +130% (363/158) |
| Example 4 | 3.0mm | -26% (277/375) | +125% (378/168) |
| Example 5 | 4.0mm | -26% (271/366) | +124% (380/169) |
| Example 6 | 5.0mm | -26% (268/361) | +111% (378/179) |
| Example 7 | 6.0mm | -26% (262/354) | +108% (396/190) |

As shown in Tables 1 and 2, it was ascertained that, in Comparative example 3 and Examples 1 to 7, as compared with Comparative Examples 1 and 2, increases in both the capacitance change rate and in the DC internal resistance were suppressed. It was also ascertained that increases in both the capacitance change rate and in suppressed when the anode-side non-facing portions 11 was longer. Further, from the fact that an increase in the capacitance change rate and an increase in the DC internal resistance were suppressed also in Comparative example 3, in which the anode foil 1 and the cathode foil 2 had the same width, when compared to Comparative examples 1 and 2, it was ascertained that both increase in the capacitance change rate and the increase in the DC internal resistance were suppressed when a width of the anode-side non-facing portions 11 was at least in a range of more than 0 mm and 6.0 mm or less.

As a result, it was confirmed that, when γ-butyrolactone was used as a solvent, a product lifetime of the electric double-layer capacitor was improved by providing the anode-side non-facing portions 11 on the anode foil 1. However, although an effect of suppressing an increase in the DC internal resistance was obtained most satisfactorily in Example 7 in which the anode-side non-facing portions 11 was extended to a width of 6.0 mm at each side portion thereof, an absolute value of the DC internal resistance after elapse of 1500 hours was higher than those of Comparative Examples 1 to 3 and Examples 1 to 6.

That is, when extension of the anode side non-facing portions 11 is in a range of more than 0 mm and 6.0 mm or less in width at both sides, an effect of suppressing an increase in DC internal resistance can be satisfactorily obtained. When an absolute value of the DC internal resistance is considered, a preferable range of the anode-side non-facing portions 11 is more than 0 mm and less than 6.0 mm each at both side portions.

### (Example 8 and Example 9)

An electric double-layer capacitor of Example 8 was different from that of Example 6 in which the anode-side non-facing portions 11 were each 5.0 mm at both side portions in that a polyolefin separator 3 which was a non-woven fabric was used, and the other constituents were the same. An electric double-layer capacitor of Example 9 was different from that of Example 7 in which the anode-side non-facing portions 11 were each 6.0 mm at both side portions in that a polyolefin separator 3 which was a non-woven fabric was used, and the other constituents were the same.

### (Checking of exterior appearance)

The elements of Examples 3 to 9 were each observed from a body surface and a lower end surface. The results are shown in Table 3 below. In Table 3, examples in which a change in color to brown or the like was observed in the separator 3 are shown by "yes", and examples in which a change in color was not observed in the separator 3 are shown by "no".

**(Table 3)**

| | Width of anode-side non-facing portion | Types of separator | Color change |
|---|---|---|---|
| Example 3 | 2.0mm | Rayon | No |
| Example 4 | 3.0mm | Rayon | No |
| Example 5 | 4.0mm | Rayon | No |
| Example 6 | 5.0mm | Rayon | Yes |
| Example 7 | 6.0mm | Rayon | Yes |
| Example 8 | 5.0mm | Polyolefin | No |
| Example 9 | 6.0mm | Polyolefin | No |

As shown in Table 3, in contrast to Examples 3 to 5 in which the anode-side non-facing portions 11 were respectively set to 2.0 mm to 4.0 mm at both side portions, a color change was observed on a lower end side of the separator 3 in Examples 6 and 7 in which the anode-side non-facing portions 11 were respectively set to 5.0 mm to 6.0 mm at both side portions . On the other hand, in Examples 8 and 9 in which the anode-side non-facing portions 11 were respectively set to 5.0 mm and 6.0 mm at both side portions which are the same as those in Examples 6 and 7, there was no color change on the lower end side of the separator 3. The separator 3 of Examples 8 and 9 was an acid resistant non-woven fabric.

As a result, when adding a viewpoint of coloring of the separator 3, a more preferable range of the anode-side non-facing portions 11 was more than 0 mm and less than 5 mm each at both side portions. However, it was confirmed that the widths of the anode-side non-facing portions 11 can be in a range of more than 5 mm and 6 mm or less each at both side portions when the separator 3 is formed of an acid resistant non-woven fabric.

### (Comparative example 4)

In the element, the anode foil 1 was wound as the beginning of the first winding and as the end of the last winding. That is, by first winding the anode foil 1, winding so that the anode foil 1 is on an inner peripheral side and the cathode foil 2 is on an outer peripheral side in the layers of the anode foil 1, the separator 3, and the cathode foil 2, and finally winding the anode foil 1 one more turn past an end portion of the cathode foil 2 on the outermost periphery, the cathode foil 1 is made to be positioned on the innermost periphery and on the outermost periphery. Then, the anode foil 1 was caused to protrude by 30 mm in the strip length direction at the beginning of the first winding and to protrude by 30 mm in the strip length direction at the end of the last winding, and portions not facing the cathode foil 2 is formed at both ends of the anode foil 1 in the strip length direction. Other fabrication conditions of the electric double-layer capacitor such as a size of the anode-side non-facing portions 11 or the like were the same as those in Example 1.

### (Checking of lifetime performance)

A constant voltage of 2.5 V was applied to the electric double-layer capacitors of Example 1 and Comparative example 4 at 85°C to measure a discharge capacitance and a DC internal resistance at the initial stage and a discharge capacitance and a DC internal resistance after elapse of 150 hours, and a capacitance change rate ΔCap (%) and DC internal resistance ΔDCIR (%) were calculated. The results are shown in Table 4 below.

**(Table 4)**

| | At initial stage | | After elapse of 150 hrs. | | Δ Cap. | Δ DCIR |
|---|---|---|---|---|---|---|
| | Cap. | DCIR | Cap. | DCIR | | |
| Example 1 | 370F | 1.9mΩ | 317F | 2.6mΩ | -14.5% | 37.6% |
| Comparative example 4 | 375F | 1.8mΩ | 297F | 3.4mΩ | -20.8% | 88.1% |

As shown in Table 4, Comparative example 4 in which portions not facing the cathode foil 2 were provided in the anode foil 1 at both ends in the strip length direction showed results in which the capacitance change rate and the DC internal resistance were not satisfactory compared with Example 1 in which the cathode-side non-facing portions 21 were provided in the strip length direction.

As a result, it has been confirmed that, while the anode-side non-facing portions 11 has an effect of suppressing an increase in the capacitance change rate and the DC internal resistance the electric double-layer capacitor, the effect of suppressing an increase in the capacitance change rate and the DC internal resistance cannot be obtained in the electric double-layer capacitor when portions not facing the cathode foil 2 are provided the anode foil 1 in the strip length direction. Further, when the elements of Example 1 and Comparative Example 4 were each observed from the body surface and the lower end surface, a carbonization phenomenon was observed at the portions at the beginning of the winding and at the end of the winding in the separator 3 of Comparative example 4.

### REFERENCE SIGNS LIST

1 Anode foil
11 Anode-side non-facing portion
2 Cathode foil
21 Cathode-side non-facing portion
3 Separator
4 Tab

## Claims

1. An electric double-layer capacitor comprising:
an element formed by winding an anode foil and a cathode foil with a separator interposed therebetween and being impregnated with an electrolytic solution,
wherein:
the electrolytic solution contains γ-butyrolactone as a solvent,
a strip width of the anode foil is larger than a strip width of the cathode foil, and
the element is formed so that the anode foil is wound to protrude with respect to the cathode foil in a strip width direction.

2. The electric double-layer capacitor according to claim 1, wherein
a strip length of the cathode foil is longer than a strip length of the anode foil,
the element is wound so that the cathode foil is positioned at an innermost periphery and an outermost periphery, and
the cathode foil protrudes with respect to the anode foil at a beginning of the winding and at an end of the winding in a strip length direction.

3. The electric double-layer capacitor according to claim 1 or 2, wherein the anode foil is wider than the cathode foil by more than 0 mm and less than 12.0 mm.

4. The electric double-layer capacitor according to claim 1 or 2, wherein the anode foil is wider than the cathode foil by more than 0 mm and less than 10.0 mm.

5. The electric double-layer capacitor according to any one of claims 1 to 4, wherein the element is formed so that both side portions of the anode foil extending in the strip length direction are wound to protrude with respect to the cathode foil.

6. The electric double-layer capacitor according to claim 5, wherein both side portions of the anode foil are wound to each protrude by more than 0 mm and less than 6.0 mm with respect to the cathode foil.

7. The electric double-layer capacitor according to claim 5, wherein both side portions of the anode foil are wound to each protrude by more than 0 mm and less than 5.0 mm with respect to the cathode foil.

8. The electric double-layer capacitor according to any one of claims 1 to 7, wherein the separator is a non-woven fabric containing synthetic fibers.
